# NOUVEAU FASCICULE DE BREVET EUROPEEN

(11) **EP 3 768 070 B3**
(45) Date de publication du présent fascicule: **04.12.2024**
(45) Mention de la délivrance du brevet: 23.02.2022
(21) Numéro de dépôt: 19715542.7
(22) Date de dépôt: 04.03.2019
(51) Int. Cl.: A01G 17/08, E04G 21/12

(54) **APPAREIL POUR LA POSE D'ATTACHES FILAIRES**
VORRICHTUNG ZUM ANBRINGEN VON DRAHTBEFESTIGUNGSELEMENTEN
APPARATUS FOR PLACING WIRE FASTENERS

(30) Priorité: 20.03.2018 FR 1870310
(43) Date de publication de la demande: 27.01.2021
(73) Titulaire: PELLENC, 84120 Pertuis (FR)
(72) Inventeur: PELLENC, Roger, 84120 Pertuis (FR); CHAUDET, Nicolas, 84120 Pertuis (FR); GILBERT, Philippe, 13610 Le Puy Sainte Réparade (FR)
(74) Mandataire: Cabinet Nuss
(86) Numéro de dépôt international: PCT/FR2019/050476
(87) Numéro de publication internationale: WO 2019/180340

(56) Documents cités:
- JP-A- 2010 189 055
- JP-A- H07 125 719
- US-A- 3 590 885

## Description

### Domaine technique

La présente invention concerne un appareil pour la pose d'attaches filaires. Un tel appareil, encore désigné par "pistolet attacheur" est utilisé pour la fixation de petites branches ou de rameaux d'arbres, d'arbustes ou d'arbrisseaux, ou encore pour la fixation de sarments de vigne sur un support mince et en particulier sur des fils de palissage.

La fixation se fait au moyen d'un fil d'attache torsadé par le pistolet attacheur.

L'invention trouve des applications principalement dans les domaines de l'arboriculture, notamment de l'arboriculture fruitière, et de la viticulture.

### Etat de la technique antérieure

Une illustration de l'état de la technique est donnée par le brevet EP0763323.

Le brevet EP 0763323 concerne un pistolet attacheur pourvu d'un moteur électrique d'actionnement unique, alimenté à courant continu. Le moteur assure l'actionnement d'une tête de pose d'attaches du pistolet pour des fonctions de préparation d'une attache à partir d'un fil d'attache et pour une fonction consistant à torsader le fil de l'attache après sa mise en place autour des éléments à attacher.

Le fil d'attache est constitué d'au moins un fil d'acier doux ou inoxydable, droit ou replié, et pourvu d'un gainage, de préférence d'une bande de gainage en papier ou en matière plastique. Il est délivré par une bobine de fil d'attache distante, portée à la ceinture d'un utilisateur.

Les documents CN106818391 ou CN206564982 montrent un pistolet attacheur pourvu d'une bobine de fil d'attache intégrée.

L'état de la technique est encore illustré par les documents suivants qui concernent des appareils de pose d'attaches filaires pourvus d'un porte bobine local ou d'un porte bobine distant:
- US 3 590 885
- JP H07 125719
- JP2010 189055

### Exposé de l'invention

L'invention procède de l'identification d'un certain nombre de difficultés rencontrées avec les pistolets attacheurs connus.

On peut notamment relever les difficultés suivantes :
- L'utilisation des pistolets à bobine distante est susceptible d'occasionner des difficultés de dévidage du fil d'attache et un enchevêtrement inopiné du fil d'attache avec des végétaux ou des obstacles situés dans le voisinage de l'utilisateur. Par exemple, la réalisation d'attaches en hauteur nécessite d'allonger considérablement le bras et augmente ainsi la longueur de fil d'attache dévidé entre la bobine et l'attacheur. La réalisation ensuite d'une attache dans une position proche de la bobine entraine des risques de dommage pour le fil d'attache préalablement dévidé de la bobine.
- L'utilisation de fils d'attache à faible résistance ou de fils d'attache extensibles longitudinalement est susceptible de conduire à des étirements inopinés du fil d'attache avant d'atteindre la tête de pose d'attache notamment en raison de contraintes subies par le fil d'attache avant son admission dans l'appareil de pose d'attaches.
- L'utilisation de réserves de fil d'attache intégrées au pistolet attacheur et notamment de bobines de fil d'attache intégrées au pistolet attacheur augmente le poids du pistolet et le rend inapproprié à un usage soutenu.

On peut noter à cet égard, que le nombre d'attaches usuellement posé dans une vigne peut varier suivant le mode de conduite du vignoble et du cépage de 9 000 à 80 000 attaches par hectare.
- Par ailleurs l'utilisation de réserves de fil d'attache intégrées au pistolet attacheur limite considérablement la longueur du fil de réserve disponible en raison du poids et de l'encombrement du fil.

En vue de surmonter ces difficultés, l'invention propose un appareil de pose d'attaches avec un corps d'appareil pourvue d'une poignée et comprenant :
- une entrée de fil pour la réception d'un fil d'attache,
- une tête de pose d'attaches,
- au moins un moteur électrique d'actionnement de la tête de pose d'attaches et
- au moins un premier porte-bobine pour la réception d'une réserve de fil d'attache.

Conformément à l'invention le corps d'appareil comprend une embase de fixation pouvant recevoir le premier porte-bobine, pour une fixation amovible du premier porte-bobine sur le corps d'appareil, l'embase de fixation et le premier porte-bobine comportant un verrou élastique.

La fixation amovible du premier porte-bobine permet de passer rapidement d'une configuration de l'appareil à bobine intégrée à une configuration de l'appareil à bobine distante et réciproquement, en affranchissant l'appareil non seulement du poids de la bobine dans la configuration à bobine distante mais aussi en l'affranchissant du poids du premier porte-bobine.

Cette caractéristique permet de réduire le poids de l'appareil porté à la main dans une configuration à bobine distante. Elle le rend ainsi plus approprié à une utilisation intensive sur un temps d'utilisation long. Elle permet aussi de réaliser des attaches sur différents arbres ou arbustes au cours de la journée nécessitant des attaches à différentes hauteurs. L'utilisateur peut ainsi sur une journée de travail utiliser le premier porte-bobine sur l'appareil lui permettant de positionner des attaches sans avoir de contraintes d'un fil d'attache qui lui serait relié, puis alterner avec un positionnement distant de la bobine lui permettant de limiter la fatigue liée à la manipulation de l'appareil.

On désigne par configuration à bobine intégrée une configuration dans laquelle le premier porte-bobine est monté sur le corps d'appareil. Le premier porte-bobine peut dans ce cas être pourvu d'une bobine de fil d'attache alimentant l'appareil de pose d'attaches.

La configuration à bobine distante s'entend d'une configuration dans laquelle le premier porte-bobine est retiré de l'appareil de pose d'attache. Dans ce cas, une réserve de fil d'attache peut être constituée par une bobine portée, par exemple, à la ceinture ou sur un harnais de portage au dos. Le portage de la bobine distante peut comporter le premier porte-bobine détaché de l'appareil et positionné ainsi de façon amovible sur la ceinture ou sur le harnais.

La double configuration permet également d'utiliser l'appareil avec deux types de fil d'attache différents. Un premier type de fil d'attache, par exemple du fil non étirable, peut être utilisé dans la configuration à bobine distante, et un deuxième type de fil d'attache, par exemple du fil d'attache étirable peut être utilisé dans la configuration à bobine intégrée.

On considère que l'embase de fixation du premier porte-bobine est une embase susceptible de recevoir un porte-bobine compatible avec l'embase pour sa fixation amovible.

De préférence, l'embase de fixation du premier porte-bobine peut être ménagée à proximité de l'entrée de fil.

L'embase de fixation et le premier porte-bobine présentent respectivement des reliefs d'emboîtement complémentaires pour une fixation du premier porte-bobine sur l'embase de fixation par complémentarité de forme.

Un tel mode de fixation permet la mise en place et le retrait rapide et sans outil du porte-bobine. Cette caractéristique est particulièrement avantageuse pour un utilisateur porteur de gants de protection qui réduisent sa sensibilité tactile.

Les reliefs d'emboîtement de l'embase comportent des rails de part et d'autre de l'entrée de fil. Cette disposition permet une fixation du porte-bobine au plus près de l'entrée de fil.

La disposition de l'embase de fixation du premier porte-bobine à proximité de l'entrée de fil présente plusieurs avantages. Elle permet notamment de réduire la distance parcourue par le fil d'attache en dehors de la bobine et de l'appareil de pose d'attaches, et de réduire ainsi un risque d'accrochage inopiné du fil d'attache.

Un autre avantage est de procurer un équilibre des masses de l'appareil lorsque l'entrée de fil d'attache et la tête de pose d'attaches sont ménagées en des extrémités opposées du corps d'appareil, de part et d'autre de la poignée de saisie.

Selon une autre possibilité de mise en oeuvre intéressante de l'appareil de de pose d'attaches, celui-ci peut comporter une batterie, intégrée au corps d'appareil, pour une alimentation en énergie du moteur électrique.

Dans ce cas, l'appareil peut comporter, de préférence, une prise électrique pour la connexion d'un chargeur de batterie.

La batterie peut être logée, par exemple, dans une poignée de l'appareil de pose d'attaches.

L'intégration d'une batterie dans le corps d'appareil permet d'éviter un fil d'alimentation électrique vers une batterie distante et écarte ainsi un risque d'emmêlement du fil d'attache avec le fil d'alimentation électrique, lors d'une utilisation dans une configuration à bobine distante. Elle facilite aussi la manipulation de l'appareil compte tenu de l'absence de cette liaison supplémentaire de l'appareil à l'utilisateur.

La charge et la décharge de la batterie peuvent être contrôlées par le circuit électronique commandant aussi les moteurs.

L'intégration d'une batterie dans le corps d'appareil est rendue possible par une réduction du poids et une augmentation de la capacité des batteries, et notamment des batteries au lithium, plus particulièrement des batteries Lithium-Ion ou lithium polymères. Le surpoids de l'appareil, occasionné par la batterie intégrée, est également compensé, au moins en partie, par la possibilité de retirer le porte-bobine.

Il convient de souligner que la possibilité d'intégrer une batterie dans le corps de l'appareil n'exclut pas un usage de l'appareil avec une batterie distante et en particulier avec une batterie portée à la ceinture ou sur un harnais de portage.

La prise électrique permet de relier à l'appareil de pose d'attaches un chargeur électrique de la batterie, ou éventuellement un câble électrique d'alimentation reliant l'appareil à une batterie distante. La prise peut être constituée de préférence par une embase femelle.

De manière avantageuse, le premier porte-bobine peut former un capot de protection de la prise électrique lorsque le premier porte-bobine est reçu sur l'appareil. La prise électrique est dans ce cas protégée par la mise en place du premier porte-bobine sur le corps de l'appareil. La prise est en particulier protégée contre l'introduction inopinée de salissures ou d'un corps étranger. Elle est également protégée contre une introduction malencontreuse du fil d'attache dans la prise.

La prise électrique peut en effet être disposée au voisinage de l'entrée de fil.

Dans ce cas, le premier porte-bobine forme un capot pour la prise mais comprend également un passage pour le fil d'attache vers l'entrée de fil d'attache.

Comme indiqué plus haut, l'embase de fixation et le premier porte-bobine comportent un verrou pour verrouiller la position du premier porte-bobine sur le corps d'appareil. Le verrou, élastique, permet de garantir le maintien du porte-bobine sur le corps de l'appareil de pose d'attache. Par ailleurs l'usage d'un verrou élastique, c'est-à-dire d'un verrou à encliquetage, permet également une manipulation aisée pour un utilisateur ganté.

Selon une possibilité particulière d'exécution du verrou élastique, celui-ci peut comporter une lame élastique solidaire du premier porte-bobine, et une encoche de l'embase de fixation, de forme complémentaire à la lame élastique, l'encoche recevant la lame élastique dans une position verrouillée. La lame métallique est par exemple une lame en acier inoxydable.

Outre le porte-bobine, l'appareil de pose d'attache peut comporter un couvercle de protection de la prise électrique, distinct du premier porte-bobine, et compatible avec l'embase de fixation du premier porte-bobine, le couvercle de protection pouvant être mise en place sur l'embase de fixation lorsque le premier porte-bobine est retiré du corps d'appareil.

Le couvercle peut présenter une lame élastique conjuguée à l'encoche de l'embase de fixation, mentionnée ci-dessus, et former avec l'encoche un verrou.

Il s'agit dans ce cas également d'un verrou élastique comparable à celui du premier porte-bobine.

D'une manière déjà évoquée précédemment, l'appareil peut comporter, en outre, un deuxième porte-bobine, distinct du premier porte-bobine et distant du corps d'appareil.

On considère que le deuxième porte-bobine est distant du corps d'appareil lorsqu'il n'est pas relié au corps d'appareil, autrement que par le fil d'attache dont il est éventuellement pourvu.

Le deuxième porte-bobine peut recevoir une ou plusieurs bobines de fil d'attache pour une utilisation de l'appareil dans une configuration à bobine distante.

L'appareil peut comporter, dans ce cas, au moins l'un parmi une ceinture de portage et un harnais de portage au dos, distants du corps d'appareil et pourvus du deuxième porte-bobine. La ceinture et/ou le harnais peuvent également servir au portage d'une batterie d'alimentation électrique ou d'une batterie auxiliaire.

Alternativement, la ceinture et/ou le harnais peuvent comporter une embase de fixation de forme similaire à celle du corps d'appareil et le premier porte-bobine peut être fixé sur la ceinture et/ou le harnais et constituer ainsi le deuxième porte-bobine.

Dans une utilisation de l'appareil de pose d'attache avec une bobine distante, l'appareil est tenu par la poignée, par une main de l'utilisateur. L'utilisateur peut dans ce cas porter le deuxième porte-bobine, à la ceinture, par exemple.

L'appareil de pose d'attache peut comporter au moins une bobine de fil d'attache reçue sur le premier porte-bobines. Il peut aussi comporter, le cas échéant une ou plusieurs bobines équipant le deuxième porte-bobine distant.

D'autres caractéristiques et avantages de l'invention ressortent de la description qui suit, en référence aux figures des dessins. Cette description est donnée à titre illustratif et non limitatif.

### Brève description des figures

La figure 1 est une perspective d'un appareil de pose d'attaches conforme à l'invention.
La figure 2 est une représentation schématique d'un l'appareil de pose d'attaches, conforme à l'invention et tenu à la main, et illustre une utilisation de l'appareil avec une bobine distante.
La figure 3 est une perspective, à plus grande échelle, avec un éclaté partiel, d'un premier porte-bobine de l'appareil de pose de la figure 1.
La figure 4 est une perspective, à plus grande échelle, avec un éclaté partiel, d'un couvercle de l'appareil de pose de la figure 1.

Les figures sont exécutées à échelle libre.

### Description détaillée de modes de mise en oeuvre de l'invention.

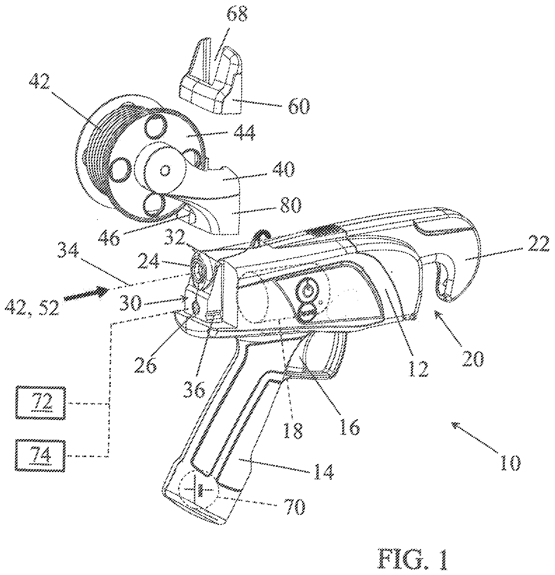

La figure 1 montre un appareil de pose d'attache 10 conforme à l'invention. Il s'agit d'un pistolet attacheur avec un corps d'appareil 12 pourvu d'une poignée 14 avec une gâchette de déclenchement 16.

La gâchette permet de déclencher la pose d'une attache.

A l'avant de l'appareil se trouve une tête de pose d'attache 20. Elle est pourvue d'un bec 22, caractéristique, pour venir en prise sur des éléments à attacher. Typiquement le bec 22 peut être engagé sur un rameau ou un sarment et un fil de palissage pour fixer le rameau ou le sarment sur le fil de palissage au moyen d'une attache torsadée.

La tête de pose d'attaches 20 comprend pour l'essentiel un crochet guide-fil, pivotant, logé dans le bec 22. Elle comprend également un mécanisme d'entrainement du fil d'attache pour faire avancer le fil d'attache dans le crochet autour des éléments à attacher, un couteau pour découper des tronçons de fil d'attache, et un torsadeur pour torsader les extrémités libres des tronçons de fil d'attache découpés et former une attache autour des éléments à attacher. L'ensemble de ces organes est mu par un moteur électrique 18 représenté de manière schématique en trait discontinu.

Le fonctionnement détaillé de la tête de pose d'attache n'est pas décrit ici. On peut, au besoin, se reporter à la description du brevet EP 0763323 dont la présente invention constitue un perfectionnement.

A l'arrière de l'appareil, c'est-à-dire à l'opposé de la tête de pose d'attaches 20, par rapport à la poignée 14, se trouve une entrée 24 pour fil d'attache et une prise électrique 26.

Autour de l'entrée 24 pour fil d'attache et de la prise électrique 26, le corps d'appareil 12 présente une embase 30 pour la fixation amovible d'un premier porte-bobine 40.

L'embase 30 présente, de part et d'autre de l'entrée de fil 24, un relief d'emboitement sous la forme de rainures, formant des rails 32 pour un engagement par complémentarité de forme du premier porte-bobine 40. Les rails s'étendent de manière sensiblement perpendiculaire à un axe 34 d'engagement de fil d'attache dans l'entrée 24 pour fil d'attache.

L'embase de fixation 30 présente également une encoche 36 pour un verrou élastique décrit ultérieurement.

L'entrée de fil d'attache 24 peut recevoir un fil d'attache 42 à partir d'une bobine de fil 44 supportée par le premier porte-bobine 40 lorsque le premier porte-bobine est mis en place sur l'embase 30.

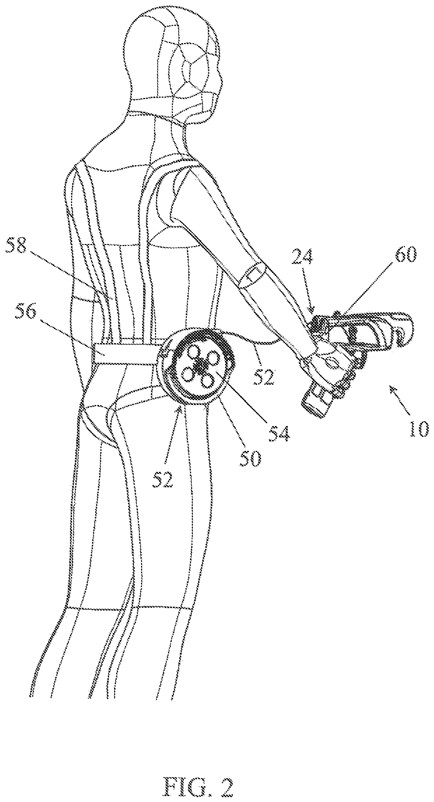

Alternativement, l'entrée de fil d'attache peut également recevoir, un fil d'attache 52 à partir d'une bobine de fil 54 supportée par un deuxième porte bobine 50 distant comme le montre la figure 2. Ce fil d'attache 52, remplace alors le fil d'attache 42 de la bobine 44 se trouvant sur le premier porte bobine 40. Dans l'exemple de la figure 2, le deuxième porte bobine 50, distant, est monté sur la ceinture 56 d'un harnais 58 porté par un utilisateur.

Le premier et le deuxième porte-bobines permettent une utilisation de l'appareil de pose d'attaches soit dans une configuration à bobine intégrée soit dans une configuration à bobine distante.

Par retour à la figure 1, le premier porte-bobine 40, lorsqu'il est en place sur l'embase 30 constitue un capot de protection de la prise électrique 26. La partie du premier porte-bobine constituant le capot de protection est indiquée avec la référence 46.

Lorsque le premier porte-bobine 40, amovible, est retiré de l'embase 30 du corps d'appareil 12, il peut y être remplacé par un couvercle 60. Le couvercle 60 constitue également une protection de la prise électrique 26.

Le couvercle de protection présente toutefois une encoche 68 libérant un passage vers l'entrée de fil d'attache 24 lorsqu'il est en place sur l'embase 30.

Une source principale d'alimentation du moteur électrique 18 de l'appareil de pose d'attaches 10 est constituée par une batterie électrique 70 intégrée à la poignée 14. La batterie électrique est représentée schématiquement.

La batterie peut être chargée au moyen d'un chargeur 72, extérieur à l'appareil de pose 10 et relié à la prise 26 par un câble électrique. Lors de la charge de la batterie, le premier porte-bobine 40 et le couvercle 60 sont retirés de l'embase 30.

Une autre possibilité d'alimentation du moteur consiste à utiliser une batterie distante 74, extérieure à l'appareil de pose et portée, par exemple par le harnais 58. La batterie distante peut également être reliée à la prise 26. Le recours à une batterie distante est réservé à une utilisation de l'appareil dans la configuration à bobine distante, c'est-à-dire sans le premier porte-bobine 40. Le couvercle 60 est également retiré pour le branchement d'une batterie distante 74.

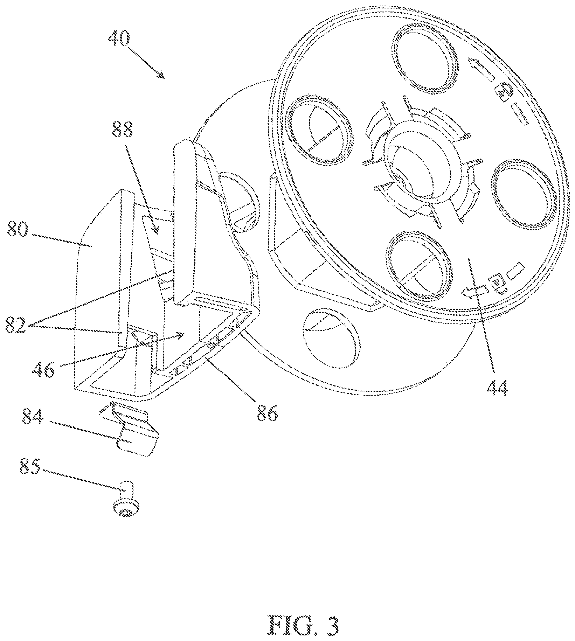

La figure 3 montre plus en détail le premier porte-bobine 40 et la bobine 44 montée sur le premier porte-bobine. La bobine 44 est représentée sans fil d'attache.

On peut noter que le premier porte-bobine 40 présente un socle de fixation 80 avec une forme complémentaire à l'embase 30 du corps d'appareil 12. Le socle de fixation 80 comprend en particulier deux rails saillants 82 susceptibles d'être engagés sur les rainures formant les rails 32 de l'embase. En d'autres termes, les rails 82 du socle de fixation 80 peuvent coulisser dans les rails 32 de l'embase de fixation 30 dans une configuration à complémentarité de forme, de manière à engager le premier porte-bobine 40 sur l'embase 30.

Le socle 80 présente également une cloison 86 formant le capot 46 de protection et de recouvrement de la prise électrique 26.

Une ouverture 88 dans la cloison 86 permet le passage d'un fil d'attache de la bobine 44 vers l'entrée de fil d'attache 24 lorsque le premier porte-bobine 40 est en place sur l'embase 30.

On peut noter sur la figure 3, la présence dans le socle 80 d'une petite lame métallique pliée 84, fixée au socle par une vis 85. Ces deux dernières références sont représentées démontées.

Lorsqu'elle est fixée dans le socle 80, la lame métallique 84 constitue avec l'encoche 36 de l'embase 30, visible à la figure 1, un verrou élastique à encliquetage. La partie coudée de la lame métallique vient en prise dans l'encoche lors de la mise en place du premier porte-bobine 40 sur l'embase 30 et permet de retenir le premier porte-bobine sur l'embase.

La libération du verrou intervient par l'exercice sur le premier porte-bobine 40 d'une force de traction suffisante dans l'axe des rails 82 pour plier la lame métallique élastique et la désengager de l'encoche 36.

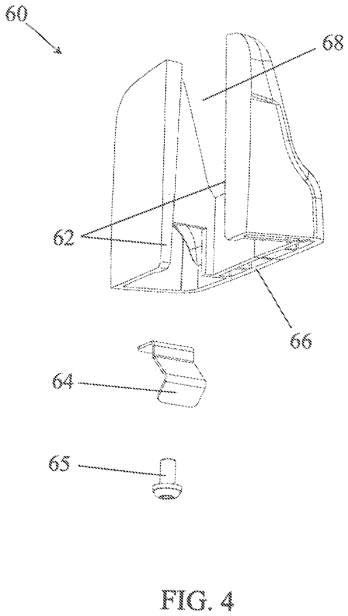

La figure 4 montre à plus grande échelle le couvercle 60 susceptible d'être installé sur l'embase 30 du corps d'appareil 12 en lieu et place du premier porte-bobine 40. La configuration générale du couvercle est proche de celle du socle 80 décrit en référence à la figure 3.

Le couvercle présente une cloison 66 formant un capot de protection pour la prise électrique 26, et une encoche 68 pour le passage d'un fil d'attache.

Le couvercle 66 comprend également des rails 62, comparables aux rails 82 du socle 80 de la figure 2. Les rails 62 du couvercle 60 peuvent être engagés par complémentarité de forme sur les rails 32 de l'embase 30 du corps d'appareil 12.

Le couvercle 60 présente également une lame métallique 64 fixée par une vis 65. La lame métallique 64, tout comme la lame métallique 84 du socle 80, permet de constituer un verrou élastique avec l'encoche 36 de l'embase 30 du corps d'appareil 12.

## Revendications

1. Appareil (10) de pose d'attaches avec un corps d'appareil (12) pourvu d'une poignée (14) et comprenant :
- une entrée de fil (24) pour la réception d'un fil d'attache,
- une tête (20) de pose d'attaches, et
- au moins un premier porte-bobine (40) pour la réception d'une réserve de fil d'attache,
**caractérisé en ce que**
- l'appareil comprend au moins un moteur électrique (18) d'actionnement de la tête de pose et **en ce que** le corps d'appareil (12) comprend une embase de fixation (30) pouvant recevoir le premier porte-bobine, pour une fixation amovible du premier porte-bobine (40) sur le corps d'appareil (12), l'embase de fixation (30) et le premier porte-bobine (40) comportant un verrou élastique (36,84),
- l'embase de fixation (30) et le premier porte-bobine (40) présentent respectivement des reliefs d'emboîtement (32, 82) complémentaires pour une fixation du premier porte-bobine (40) sur l'embase de fixation (30) par complémentarité de forme,
- et les reliefs d'emboîtement de l'embase comportent des rails (32) de part et d'autre de l'entrée de fil (24).

2. Appareil selon la revendication 1, dans lequel le verrou élastique comprend une lame élastique (84) solidaire du premier porte-bobine (40), et une encoche (36) de l'embase de fixation (30), de forme complémentaire à la lame élastique, l'encoche recevant la lame élastique dans une position verrouillée.

3. Appareil selon l'une quelconque des revendications 1 à 2, comprenant une batterie (70), intégrée au corps d'appareil (12), pour d'alimentation en énergie du moteur électrique (18).

4. Appareil selon la revendication 3, comprenant une prise électrique (26) pour la connexion d'un chargeur de batterie.

5. Appareil selon la revendication 4, dans lequel le premier porte-bobine (40) forme un capot (46) de protection de la prise électrique (26) lorsque le premier porte-bobine (40) est reçu sur l'appareil (10).

6. Appareil selon la revendication 4 ou 5, dans lequel la prise électrique (26) est disposée au voisinage de l'entrée de fil (24).

7. Appareil selon l'une quelconque des revendications 4 à 6, comprenant un couvercle de protection (60) de la prise électrique (26), distinct du premier porte-bobine (40) et compatible avec l'embase (30) de fixation du premier porte-bobine, le couvercle de protection (60) pouvant être mis en place sur l'embase de fixation lorsque le premier porte-bobine est retiré du corps d'appareil.

8. Appareil selon les revendications 6 et 7, dans lequel le couvercle (60) présente une lame élastique (64) conjuguée avec l'encoche (36) de l'embase de fixation (30) et forme avec l'encoche un verrou.

9. Appareil selon l'une quelconque des revendications précédentes, comprenant, en outre, un deuxième porte-bobine (50), distinct du premier porte-bobine (40) et distant du corps d'appareil (12).

10. Appareil selon la revendication 9, comprenant au moins l'un parmi une ceinture (56) et un harnais (58) de portage au dos, distants du corps d'appareil (12) et pourvus du deuxième porte-bobine (50).

11. Appareil selon l'une quelconque des revendications précédentes comprenant une bobine de fil d'attache reçue sur le premier porte-bobine.

## Patentansprüche

1. Vorrichtung (10) zum Anbringen von Befestigungselementen an einem Vorrichtungskörper (12), der mit einem Griff (14) versehen ist und umfassend:
- einen Drahteingang (24) für den Empfang eines Befestigungsdrahts,
- einen Kopf (20) zum Anbringen von Befestigungselementen, und
- mindestens einen ersten Spulenträger (40) für den Empfang eines Besfestigungsdrahtvorrats,
**dadurch gekennzeichnet, dass**
- die Vorrichtung mindestens einen Elektromotor (18) zum Betätigen des Anbringungskopfs umfasst und dass der Vorrichtungskörper (12) eine Befestigungsbasis (30) umfasst, die den ersten Spulenträger für eine lösbare Befestigung des ersten Spulenträgers (40) auf dem Vorrichtungskörper (12) empfangen kann, wobei die Befestigungsbasis (30) und der erste Spulenträger (40) einen elastischen Riegel (36, 84) aufweisen,
- die Befestigungsbasis (30) und der erste Spulenträger (40) jeweils komplementäre Steckreliefs (32, 82) für eine Befestigung des ersten Spulenträgers (40) auf der Befestigungsbasis (30) durch Formkomplementarität aufweisen,
- und die Steckreliefs der Basis beiderseits des Drahteingangs (24) Schienen (32) aufweisen.

2. Vorrichtung nach Anspruch 1, wobei der elastische Riegel eine elastische Lasche (84), die mit dem ersten Spulenträger (40) fest verbunden ist, und eine Nut (36) der Befestigungsbasis (30) in zu der elastischen Lasche komplementärer Form umfasst, wobei die Nut die elastische Lasche in einer verriegelten Position empfängt.

3. Vorrichtung nach einem der Ansprüche 1 bis 2, umfassend eine für die Versorgung des Elektromotors (18) mit Energie in den Vorrichtungskörper (12) integrierte Batterie (70).

4. Vorrichtung nach Anspruch 3, umfassend eine elektrische Steckdose (26) für den Anschluss eines Batterieladers.

5. Vorrichtung nach Anspruch 4, wobei der erste Spulenträger (40) eine Schutzabdeckung (46) der elektrischen Steckdose (26) bildet, wenn der erste Spulenträger (40) auf der Vorrichtung (10) empfangen ist.

6. Vorrichtung nach Anspruch 4 oder 5, wobei die elektrische Steckdose (26) in der Nähe des Drahteingangs (24) angeordnet ist.

7. Vorrichtung nach einem der Ansprüche 4 bis 6, umfassend einen Schutzdeckel (60) der elektrischen Steckdose (26), der vom ersten Spulenträger (40) verschieden und mit der Befestigungsbasis (30) des ersten Spulenträgers kompatibel ist, wobei der Schutzdeckel (60) auf der Befestigungsbasis platzierbar ist, wenn der erste Spulenträger vom Vorrichtungskörper entfernt ist.

8. Vorrichtung nach den Ansprüchen 6 und 7, wobei der Deckel (60) eine elastische Lasche (64) aufweist, die mit der Nut (36) der Befestigungsbasis (30) vereint ist und mit der Nut einen Riegel bildet.

9. Vorrichtung nach einem der vorangehenden Ansprüche, die ferner einen zweiten Spulenträger (50) umfasst, der vom ersten Spulenträger (40) verschieden und vom Vorrichtungskörper (12) beabstandet ist.

10. Vorrichtung nach Anspruch 9, die mindestens entweder einen Gurt (56) oder ein Rückentragegeschirr (58) umfasst, die vom Vorrichtungskörper (12) beabstandet und mit dem zweiten Spulenträger (50) versehen sind.

11. Vorrichtung nach einem der vorangehenden Ansprüche, die eine Befestigungsdrahtspule umfasst, die auf dem ersten Spulenträger empfangen ist.

## Claims

1. Apparatus (10) for placing fasteners with an apparatus body (12) provided with a handle (14) and comprising:
- a wire inlet (24) for receiving a fastening wire,
- a fastening placement head (20), and
- at least one first reel-holder (40) for receiving a reserve of fastening wire,
**characterised in that**
- the apparatus comprises at least one electric motor (18) for actuating the placement head and **in that** the apparatus body (12) comprises an attachment base (30) which can receive the first reel-holder, for a removable attachment of the first reel-holder (40) onto the apparatus body (12), wherein the attaching base (30) and the first reel-holder (40) include an elastic latch (36, 84),
- the attaching base (30) and the first reel-holder (40) respectively have complementary nesting reliefs (32, 82) for an attachment of the first reel-holder (40) on the attaching base (30) by form-fitting,
- and the nesting reliefs of the base include tracks (32) on either side of the wire inlet (24).

2. Apparatus according to claim 1, wherein the elastic latch comprises an elastic blade (84) secured to the first reel-holder (40), and a notch (36) in the attaching base (30) with a shape complementary to the elastic blade, with the notch receiving the elastic blade in a latched position.

3. Apparatus according to any of claims 1 to 2, comprising a battery (70), integrated into the apparatus body (12), for supplying the electric motor (18) with power.

4. Apparatus according to claim 3, comprising a power outlet (26) for the connection of a battery charger.

5. Apparatus according to claim 4, wherein the first reel-holder (40) forms a protective cap (46) for the power outlet (26) when the first reel-holder (40) is received on the apparatus (10).

6. Apparatus according to claim 4 or 5, wherein the power outlet (26) is arranged adjacent to the wire inlet (24).

7. Apparatus according to any of claims 4 to 6, comprising a protective cover (60) for the power outlet (26), separate from the first reel-holder (40) and compatible with the attaching base (30) of the first reel-holder, the protective cover (60) able to be placed on the attaching base when the first reel-holder is removed from the apparatus body.

8. Apparatus according to claims 6 and 7, wherein the cover (60) has an elastic blade (64) conjugate to the notch (36) in the attaching base (30) and forms a latch with the notch.

9. Apparatus according to any of the preceding claims, further comprising a second reel-holder (50), separate from the first reel-holder (40) and separate from the apparatus body (12).

10. Apparatus according to claim 9, comprising at least one item from a belt (56) and a harness (58) for carrying on the back, distant from the apparatus body (12) and provided with the second reel-holder (50).

11. Apparatus according to any of the preceding claims, comprising a fastening-wire reel received on the first reel-holder.
